# EUROPEAN PATENT APPLICATION

(11) **EP 4 567 981 A1**
(43) Date of publication of application: **11.06.2025**
(21) Application number: 23850116.7
(22) Date of filing: 02.08.2023
(51) Int. Cl.: H01M 50/204, H01M 50/271, H01M 50/249

(54) **BATTERY PACK**

(30) Priority: 04.08.2022 JP 2022124576
(71) Applicant: AESC Japan Ltd., Kanagawa, 2520012 (JP)
(72) Inventor: TAKAGI, Gentarou, Zama-shi, Kanagawa 252-0012 (JP); YOSHIOKA, Shinichi, Zama-shi, Kanagawa 252-0012 (JP)
(74) Representative: Becker, Eberhard
(86) International application number: PCT/JP2023/028265
(87) International publication number: WO 2024/029562

(57) **Abstract**

A battery pack (10) comprises: a housing (200) which includes a first lower mount portion (212a) and a second lower mount portion (214a1) that oppose each other with a lower seal material (232) therebetween; a battery module (100) housed in the housing (200); a lower rivet nut (242) which is fastened to at least one of the first lower mount portion (212a) and the second lower mount portion (214a1), and at least a part of which is positioned between the first lower mount portion (212a) and the second lower mount portion (214a1); and a lower bolt (244) that is fastened to the lower rivet nut (242) and fastens the first lower mount portion (212a) and the second lower mount portion (214a1) to each other.

## Description

### Technical Field

The present invention relates to a battery pack.

### Related Art

In recent years, battery packs have been developed to be used for various applications such as automobiles. A battery pack includes at least one battery module and an accommodating body in which the at least one module is accommodated.

Patent Literature 1 describes an example of a battery pack. In this battery pack, the accommodating body includes a tray member and a lid member. The tray member and the lid member are fastened to each other by a fastening member via a gasket member.

### Related Art Literature

### Patent Literature

Patent Literature 1: Japanese Patent Application Laid-Open No. 2014-175123

### SUMMARY OF INVENTION

### Problem to Be Solved by Invention

The accommodating body may include two mounting parts opposed to each other via a seal material. These two fastening parts may be fastened to each other by a fastener. In this case, improvement in sealing performance of an accommodating space of the accommodating body may be required. To improve sealing performance of the accommodating space, it is preferable to accurately adjust a thickness of the seal material. However, if the seal material is simply disposed, it may be difficult to accurately adjust the thickness of the seal material.

An example of an objective of the present invention is to improve sealing performance of the accommodating space of the accommodating body. Other objectives of the present invention will become apparent from the description in this specification.

### Means for Solving Problem

An aspect of the present invention is as follows.
[1] A battery pack includes an accommodating body, a battery module, a first fastener, and a second fastener. The accommodating body includes two mounting parts opposed to each other via a seal material. The battery module is accommodated in the accommodating body. The first fastener is fastened to at least one of the two mounting parts, and at least a portion of the first fastener is located between the two mounting parts. The second fastener is fastened to the first fastener and fastens the two mounting parts to each other.
[2] In the battery pack according to [1], a portion of the first fastener enters a space provided inside the accommodating body.
[3] In the battery pack according to [1] or [2], a gap between the two mounting parts includes a first space in which at least a portion of the seal material is embedded, and a second space in which the at least a portion of the first fastener is disposed. A distance between the two mounting parts on both sides of the second space is shorter than a distance between the two mounting parts on both sides of the first space.
[4] In the battery pack according to [3], an inclined surface is provided on at least a portion of the two mounting parts between the first space and the second space.

### Effects of Invention

According to the above aspect of the present invention, sealing performance of the accommodating space of the accommodating body can be improved.

### BRIEF DESCRIPTION OF THE DRAWINGS

[FIG. 1] is a perspective view of a battery pack according to an embodiment.
[FIG. 2] is a plan view of the battery pack according to the embodiment with an upper case removed.
[FIG. 3] is an enlarged plan view of a portion of a side frame according to the embodiment.
[FIG. 4] is a view showing a lower part of an A-A cross-section of FIG. 3.
[FIG. 5] is a view showing an upper part of the A-A cross-section of FIG. 3.

### DESCRIPTION OF THE EMBODIMENTS

Hereinafter, an embodiment of the present invention will be described with reference to the drawings. In all drawings, similar constituent elements will be labeled with similar reference signs, and descriptions thereof will be omitted as appropriate.

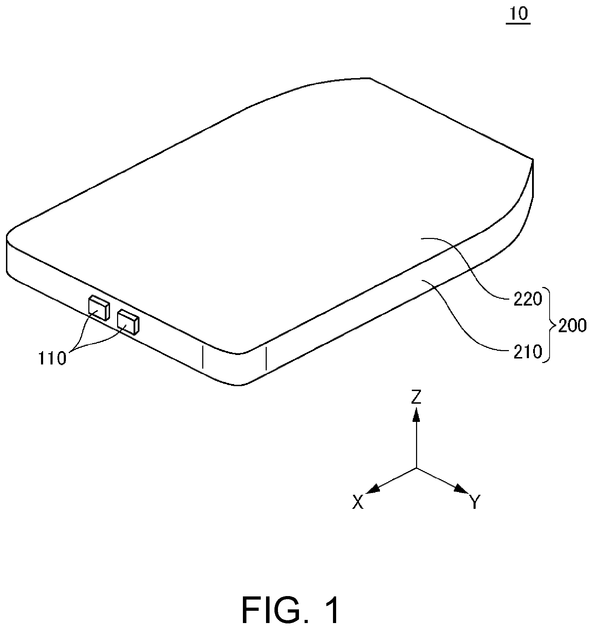

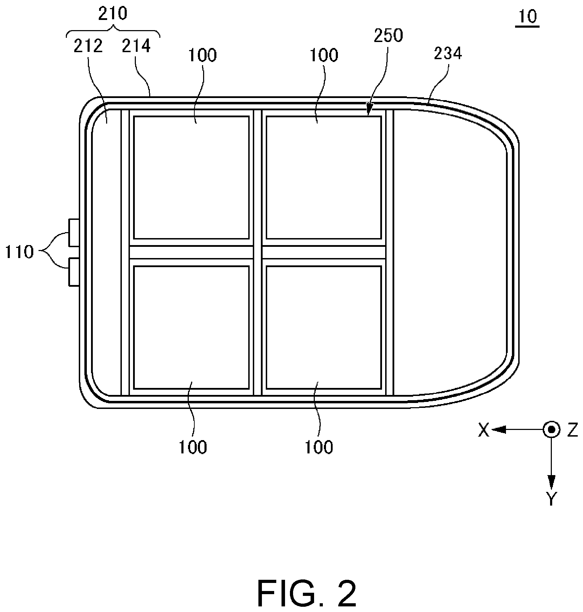

FIG. 1 is a perspective view of a battery pack 10 according to the embodiment. FIG. 2 is a plan view of the battery pack 10 according to the embodiment with an upper case 220 removed.

In the embodiment, the battery pack 10 is mounted in an automobile. Specifically, the battery pack 10 is mounted between front wheels and rear wheels of the automobile. Hereinafter, unless otherwise specified, the description will be provided assuming that the battery pack 10 is mounted in an automobile. However, the battery pack 10 may also be applied to uses other than an automobile.

In each figure, an X-direction, a Y-direction, and a Z-direction are shown to facilitate description. The X-direction indicates a front-rear direction of the battery pack 10. The Y-direction is orthogonal to the X-direction. The Y-direction indicates a left-right direction of the battery pack 10. The Z-direction is orthogonal to both the X-direction and the Y-direction. The Z-direction indicates an up-down direction of the battery pack 10. Arrows pointing in the X-direction, the Y-direction, and the Z-direction respectively indicate a front direction, a left direction, and an upper direction of the battery pack 10. In FIG. 2, a circled dot indicating the Z-direction shows that the arrow pointing in the Z-direction extends from the back of the paper surface toward the close side. However, the relationship between the X-direction, the Y-direction, and the Z-direction, and the front-rear direction, the left-right direction, and the up-down direction of the battery pack 10 is not limited to this example.

In the embodiment, the front-rear direction, the left-right direction, and the up-down direction of the battery pack 10 are determined by the automobile in which the battery pack 10 is mounted. The X-direction, the Y-direction, and the Z-direction respectively indicate a front-rear direction, a left-right direction, and an up-down direction of the automobile. The arrows pointing in the X-direction, the Y-direction, and the Z-direction respectively indicate a front direction, a left direction, and an upper direction of the automobile. However, the relationship between the front-rear direction, the left-right direction, and the up-down direction of the battery pack 10, and the front-rear direction, the left-right direction, and the up-down direction of the automobile is not limited to this example.

Hereinafter, wherever necessary, a direction perpendicular to the Z-direction will be referred to as a horizontal direction.

The battery pack 10 includes four battery modules 100 and an accommodating body 200. The four battery modules 100 include a pair of battery modules 100 arranged in the X-direction on a left side and a pair of battery modules 100 arranged in the X-direction on a right side. The accommodating body 200 has a lower case 210 and an upper case 220. The lower case 210 may also be generally referred to as, for example, a tray or a main body. The lower case 210 includes a lower plate 212 and a side frame 214. The upper case 220 may also be generally referred to as, for example, a cover or a lid part.

Each battery module 100 has multiple battery cells stacked in the horizontal direction. For example, in each battery module 100, multiple battery cell groups are connected in series, with each battery cell group including multiple battery cells connected in parallel. Alternatively, multiple single battery cells may also be connected in series.

A pair of terminals 110 is provided on a front side of the side frame 214. The pair of terminals 110 is arranged substantially parallel to the Y-direction. A front end part of each terminal 110 protrudes forward from a front surface of the side frame 214. In an electrical path, the four battery modules 100 are connected in series between the pair of terminals 110.

The lower case 210 and the upper case 220 are mounted to each other via an upper seal material 234. The lower case 210, the upper case 220, and the upper seal material 234 form an accommodating space 250. The four battery modules 100 are accommodated in the accommodating space 250.

The lower plate 212 defines a bottom part of the accommodating space 250. The side frame 214 defines a lateral part of the accommodating space 250. Specifically, when viewed from the Z-direction, the side frame 214 is provided along an outermost periphery of the lower plate 212. The upper case 220 defines a top part of the accommodating space 250.

The number and arrangement of the battery modules are not limited to the example according to the embodiment. For example, the number of the battery modules 100 may also be two only, three only, or five or more.

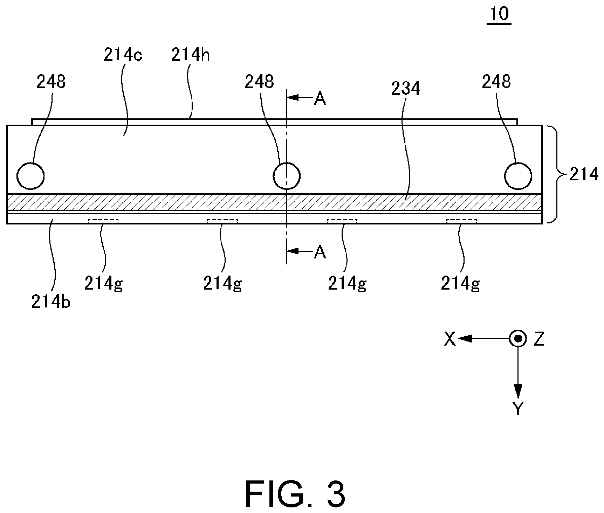

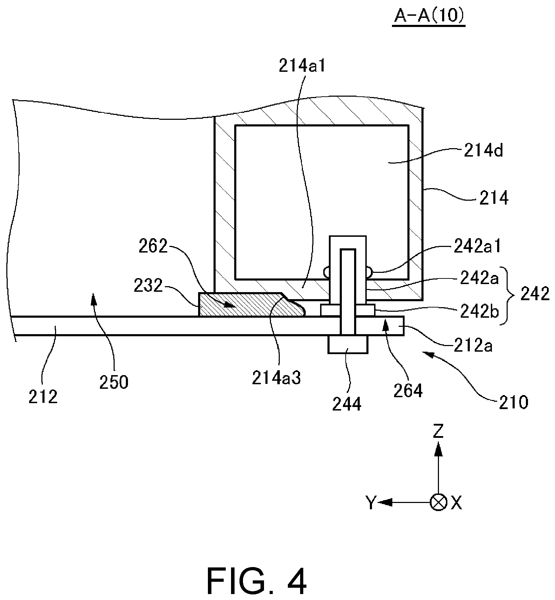

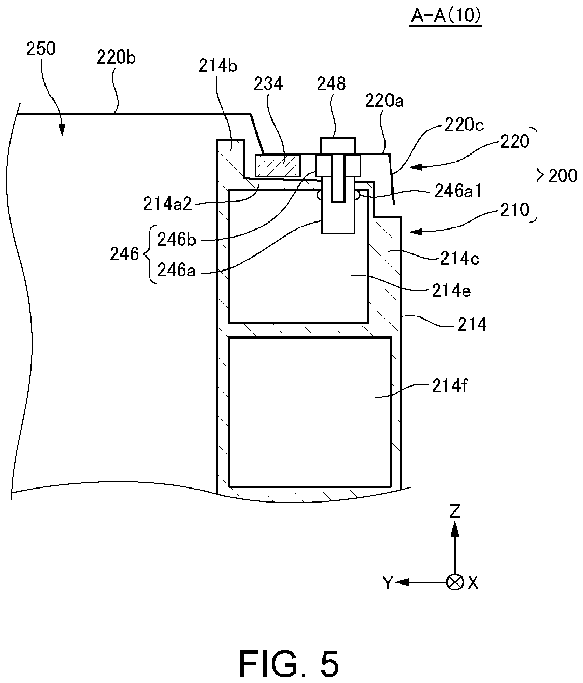

FIG. 3 is an enlarged plan view of a portion of the side frame 214 according to the embodiment. FIG. 4 is a view showing a lower part of an A-A cross-section in FIG. 3. FIG. 5 is a view showing an upper part of the A-A cross-section in FIG. 3. For simplicity of description, FIG. 3 does not illustrate the lower plate 212 shown in FIG. 4 and the upper case 220 shown in FIG. 5. For simplicity of description, FIG. 4 and FIG. 5 do not illustrate a pressure release valve 214h shown in FIG. 3. In the accommodating space 250 in the cross-sections shown in FIG. 4 and FIG. 5, the battery module 100 (not shown) is disposed. In FIG. 3, a circled dot indicating the Z-direction shows that the arrow pointing in the Z-direction extends from the back of the paper surface toward the close side. In FIG. 4 and FIG. 5, a circled cross indicating the X-direction shows that the arrow pointing in the X-direction extends from the close side of the paper surface toward the back.

As shown in FIG. 4, the lower plate 212 includes a first lower mounting part 212a. As shown in FIG. 4 and FIG. 5, the side frame 214 includes a second lower mounting part 214a1, a first upper mounting part 214a2, a partition wall 214b, and a projecting part 214c. As shown in FIG. 5, the upper case 220 includes a second upper mounting part 220a, an upper cover part 220b, and a side cover part 220c.

Referring to FIG. 4, a fastening structure of the lower plate 212 and the side frame 214 will be described.

As shown in FIG. 4, the first lower mounting part 212a and the second lower mounting part 214a1 are opposed to each other via a lower seal material 232. The first lower mounting part 212a is at least a portion of an outer peripheral part of the lower plate 212. The second lower mounting part 214a1 is at least a portion of a lower part of the side frame 214. The lower seal material 232 is, for example, an adhesive. In the embodiment, the lower seal material 232 has fluidity.

The first lower mounting part 212a and the second lower mounting part 214a1 are fastened to each other by a lower rivet nut 242 and a lower bolt 244. The lower rivet nut 242 includes a lower body 242a and a lower head 242b. A lower expanding part 242a1 is provided on an outer circumferential surface of the lower body 242a. Each of a diameter of the lower expanding part 242a1 in the horizontal direction and a diameter of the lower head 242b in the horizontal direction is larger than a diameter of the lower body 242a in the horizontal direction. The lower rivet nut 242 is riveted to the second lower mounting part 214a1 by the lower expanding part 242a1 and the lower head 242b.

The lower body 242a penetrates substantially parallel to the Z-direction through the second lower mounting part 214a1. A tip of the lower body 242a enters a hollow lower space 214d provided inside the side frame 214. In the case where the lower space 214d is provided, the side frame 214 can be made lighter compared to the case where the lower space 214d is solid.

The second lower mounting part 214a1 and the lower rivet nut 242 are fastened to each other, for example, in the following manner. First, the lower body 242a is inserted through the second lower mounting part 214a1. Accordingly, the tip of the lower body 242a enters the lower space 214d. Next, a hand nutter (not shown) is inserted through the lower body 242a from below the lower body 242a. Then, the tip of the lower body 242a is pulled downward by the hand nutter. Accordingly, the lower body 242a is deformed to form the lower expanding part 242a1. Thus, the lower rivet nut 242 is crimped to the second lower mounting part 214a1 by the lower expanding part 242a1 and the lower head 242b.

The lower bolt 244 penetrates substantially parallel to the Z-direction through the first lower mounting part 212a and is fastened to the lower rivet nut 242. With the lower rivet nut 242 and the lower bolt 244 fastened to each other, the first lower mounting part 212a and the second lower mounting part 214a1 are fastened to each other.

In the embodiment, even in the case where it is difficult to form a bolt hole in the second lower mounting part 214a1 to fasten the lower bolt 244, the second lower mounting part 214a1 and the lower bolt 244 can still be fastened to each other. For example, in the case where a thickness of the second lower mounting part 214a1 in the Z-direction is relatively small, it may be difficult to form the bolt hole in the second lower mounting part 214a1. In contrast, in the embodiment, the second lower mounting part 214a1 and the lower bolt 244 can be fastened to each other via the lower rivet nut 242. Thus, in the embodiment, it is not required to form the bolt hole in the second lower mounting part 214a1.

In the embodiment, even in the case where it is difficult to provide a nut inside the lower space 214d to fasten the lower bolt 244, the second lower mounting part 214a1 and the lower bolt 244 can still be fastened to each other. For example, in the case where the lower space 214d is closed off from the space outside the side frame 214, it may be difficult to provide the nut inside the lower space 214d. In contrast, in the embodiment, the second lower mounting part 214a1 and the lower bolt 244 can be fastened to each other via the lower rivet nut 242. Thus, in the embodiment, it is not required to provide the nut inside the lower space 214d.

A gap is provided between an upper surface of the first lower mounting part 212a and a lower surface of the second lower mounting part 214a1. The gap includes a lower inner space 262 and a lower outer space 264. The lower inner space 262 is located on the accommodating space 250 side with respect to the lower outer space 264. The lower outer space 264 is located on the outer side of the accommodating space 250 with respect to the lower inner space 262. At least a portion of the lower seal material 232 is embedded in at least a portion of the lower inner space 262. At least a portion of the lower head 242b is disposed in at least a portion of the lower outer space 264.

The lower head 242b functions as a spacer that determines a thickness of the lower seal material 232 in the Z-direction. Specifically, a rigidity of the lower head 242b is higher than a rigidity of the lower seal material 232. Thus, a height of the lower inner space 262 in the Z-direction and a height of the lower outer space 264 in the Z-direction can be determined by a height of the lower head 242b in the Z-direction. Therefore, the thickness of the lower seal material 232 in the Z-direction can be accurately adjusted according to the height of the lower head 242b in the Z-direction. As a result, sealing performance of the accommodating space 250 can be improved.

In the example shown in FIG. 4, a right end part of the lower seal material 232 enters a left end part of the lower outer space 264. In the embodiment, an amount of a portion of the lower seal material 232 that enters the lower outer space 264 can be adjusted according to the height of the lower head 242b in the Z-direction. Accordingly, it is possible to make it less likely for the portion of the lower seal material 232 entering the lower outer space 264 to run onto the lower head 242b.

A distance in the Z-direction between the first lower mounting part 212a and the second lower mounting part 214a1 in the lower outer space 264 is shorter than a distance in the Z-direction between the first lower mounting part 212a and the second lower mounting part 214a1 in the lower inner space 262. Thus, compared to the case where these distances are equal to each other, it is possible to make it less likely for the lower seal material 232 to enter the lower outer space 264. As a result, it is possible to make it less likely for the lower seal material 232 to run onto the lower head 242b. However, the distance in the Z-direction between the first lower mounting part 212a and the second lower mounting part 214a1 in the lower outer space 264 may also be equal to or greater than the distance in the Z-direction between the first lower mounting part 212a and the second lower mounting part 214a1 in the lower inner space 262.

An inclined surface 214a3 is provided on the lower surface of the second lower mounting part 214a1 between the lower inner space 262 and the lower outer space 264. The inclined surface 214a3 is inclined downward as it extends toward the outer side of the accommodating space 250. By adjusting an inclination of the inclined surface 214a3 with respect to the horizontal direction, the amount of the portion of the lower seal material 232 entering the lower outer space 264 can be adjusted.

In the embodiment, when viewed from the Z-direction, the lower seal material 232 is provided over an entire perimeter of the side frame 214. Accordingly, when viewed from the Z-direction, the lower seal material 232 surrounds the accommodating space 250. Thus, the accommodating space 250 can be sealed from the space outside the accommodating body 200 by the lower seal material 232.

In the embodiment, when viewed from the Z-direction, multiple lower bolts 244 are disposed at predetermined intervals over the entire perimeter of the side frame 214. Each lower bolt 244 is fastened to the lower rivet nut 242 by the structure described with reference to FIG. 4. The number of the lower bolts 244 provided in the entire perimeter of the side frame 214 may also be one only.

The fastener fastened to the second lower mounting part 214a1 is not limited to the lower rivet nut 242 according to the embodiment. Examples of such a fastener include not only a rivet nut but also a clinch nut. The fastener may be fastened not only to the second lower mounting part 214a1 but also to the first lower mounting part 212a.

The fastener that fastens the first lower mounting part 212a and the second lower mounting part 214a1 to each other is not limited to the lower bolt 244 according to the embodiment. Examples of such a fastener include not only a bolt but also a screw.

Referring to FIG. 5, and to FIG. 3 wherever necessary, a fastening structure of the side frame 214 and the upper case 220 will be described.

As shown in FIG. 5, the first upper mounting part 214a2 and the second upper mounting part 220a are opposed to each other via the upper seal material 234. The first upper mounting part 214a2 is at least a portion of an upper part of the side frame 214. The second upper mounting part 220a is at least a portion of an outer peripheral part of the upper case 220. The upper seal material 234 is an elastic material such as rubber.

The first upper mounting part 214a2 and the second upper mounting part 220a are fastened to each other by an upper rivet nut 246 and an upper bolt 248. The upper rivet nut 246 includes an upper body 246a and an upper head 246b. An upper expanding part 246a1 is provided on an outer circumferential surface of the upper body 246a. Each of a diameter of the upper expanding part 246a1 in the horizontal direction and a diameter of the upper head 246b in the horizontal direction is larger than a diameter of the upper body 246a in the horizontal direction. The upper rivet nut 246 is riveted to the first upper mounting part 214a2 by the upper expanding part 246a1 and the upper head 246b. The first upper mounting part 214a2 and the upper rivet nut 246 may be fastened to each other by a method similar to the method of fastening the second lower mounting part 214a1 and the lower rivet nut 242 to each other.

The upper body 246a penetrates substantially parallel to the Z-direction through the first upper mounting part 214a2. A tip of the upper body 246a enters a hollow upper space 214e provided inside the side frame 214. In the case where the upper space 214e is provided, the side frame 214 can be made lighter compared to the case where the upper space 214e is solid.

The upper bolt 248 penetrates substantially parallel to the Z-direction through the second upper mounting part 220a and is fastened to the upper rivet nut 246. With the upper rivet nut 246 and the upper bolt 248 fastened to each other, the first upper mounting part 214a2 and the second upper mounting part 220a are fastened to each other.

In the embodiment, as described in the description of the fastening structure of the lower plate 212 and the side frame 214, it is not required to form a bolt hole in the first upper mounting part 214a2 to fasten the upper bolt 248. Similarly, it is not required to provide a nut inside the upper space 214e to fasten the upper bolt 248.

The upper head 246b functions as a spacer that determines a thickness of the upper seal material 234 in the Z-direction. Specifically, a rigidity of the upper head 246b is higher than a rigidity of the upper seal material 234. Thus, a height in the Z-direction of a gap between an upper surface of the first upper mounting part 214a2 and a lower surface of the second upper mounting part 220a can be determined by a height of the upper head 246b. Therefore, the thickness of the upper seal material 234 in the Z-direction can be accurately adjusted according to the height of the upper head 246b in the Z-direction. As a result, sealing performance of the accommodating space 250 can be improved.

In the embodiment, when viewed from the Z-direction, the upper seal material 234 is provided over the entire perimeter of the side frame 214. Accordingly, when viewed from the Z-direction, the upper seal material 234 surrounds the accommodating space 250. Thus, the accommodating space 250 can be sealed from the space outside the accommodating body 200 by the upper seal material 234.

As shown in FIG. 3, in the embodiment, when viewed from the Z-direction, multiple upper bolts 248 are disposed at predetermined intervals over the entire perimeter of the side frame 214. Each upper bolt 248 is fastened to the upper rivet nut 246 by the structure described with reference to FIG. 5. The number of the upper bolts 248 provided in the entire perimeter of the side frame 214 may also be one only.

The fastener fastened to the first upper mounting part 214a2 is not limited to the upper rivet nut 246 according to the embodiment. Examples of such a fastener include not only a rivet nut but also a clinch nut. The fastener may be fastened not only to the first upper mounting part 214a2 but also to the second upper mounting part 220a.

The fastener that fastens the first upper mounting part 214a2 and the second upper mounting part 220a to each other is not limited to the upper bolt 248 according to the embodiment. Examples of such a fastener include not only a bolt but also a screw.

Referring to FIG. 3 and FIG. 5, a structure for discharging gas from the accommodating space 250 will be described. Inside the accommodating space 250, gas may be generated from the battery module 100.

As shown in FIG. 5, a gas discharge path 214f is provided inside the side frame 214. The gas discharge path 214f is hollow. The gas discharge path 214f is located between the lower space 214d and the upper space 214e in the Z-direction. As shown in FIG. 3, multiple gas discharge holes 214g are provided on an inner surface of the side frame 214. When viewed from the Z-direction, the multiple gas discharge holes 214g are disposed at predetermined intervals over the entire perimeter of the side frame 214. The accommodating space 250 and the gas discharge path 214f are in communication with each other via the multiple gas discharge holes 214g. As shown in FIG. 3, a pressure release valve 214h is provided on a portion of an outer surface of the side frame 214. Thus, gas generated from the battery module 100 inside the accommodating space 250 can be discharged to outside of the accommodating body 200 through the gas discharge holes 214g and the gas discharge path 214f from the pressure release valve 214h.

Referring to FIG. 3 and FIG. 5, the structure on the inner side in the Y-direction of the accommodating body 200 with respect to the upper seal material 234 will be described.

When viewed from the Z-direction, the upper cover part 220b is surrounded by the second upper mounting part 220a. The upper cover part 220b covers the accommodating space 250 from above.

The partition wall 214b protrudes upward from the first upper mounting part 214a2. As shown in FIG. 5, the partition wall 214b is provided at an inner end part of the first upper mounting part 214a2. Accordingly, the partition wall 214b is located between the battery module 100 and the upper seal material 234. Thus, the partition wall 214b can separate the battery module 100 and the upper seal material 234 from each other. As shown in FIG. 3, when viewed from the Z-direction, the partition wall 214b extends continuously in the entire perimeter of the side frame 214. However, the partition wall 214b may also be partially disconnected in the entire perimeter of the side frame 214. Under predetermined conditions of charging and discharging and the like of the battery module 100, high-temperature gas may be generated from the battery module 100. The partition wall 214b may function as at least a portion of a structure body that blocks direct injection of the high-temperature gas onto the upper seal material 234.

In the example shown in FIG. 5, an upper surface of the partition wall 214b is located at a position higher than an upper surface of the upper seal material 234. In other words, the upper surface of the partition wall 214b is located at a position higher than an upper surface of the upper head 246b. Thus, compared to the case where the upper surface of the partition wall 214b is located at a position lower than the upper surface of the upper seal material 234, it is possible to make it less likely for the high-temperature gas described above to be directly injected onto the upper seal material 234. However, the upper surface of the partition wall 214b may also be located at a position lower than the upper surface of the upper seal material 234. Alternatively, the upper surface of the partition wall 214b and the upper surface of the upper seal material 234 may also be substantially flush with each other.

Referring to FIG. 3 and FIG. 5, the structure on the outer side of the accommodating body 200 in the Y-direction with respect to the upper seal material 234 will be described.

When viewed from the Z-direction, the side cover part 220c is provided at an outer edge of the second upper mounting part 220a. As shown in FIG. 5, a lower end of the side cover part 220c protrudes downward from the outer edge of the second upper mounting part 220a. The side cover part 220c covers a surface of the upper seal material 234 on a side opposite to the accommodating space 250. Under predetermined conditions of washing and the like of the automobile in which the battery pack 10 is mounted, high-pressure water may be sprayed from the outer side of the accommodating body 200. The side cover part 220c may function as at least a portion of a structure body that blocks direct injection of the water onto the upper seal material 234.

As shown in FIG. 5, the projecting part 214c is located below the side cover part 220c. The projecting part 214c projects more outward than the side cover part 220c. As shown in FIG. 3, when viewed from the Z-direction, the projecting part 214c extends continuously in the entire perimeter of the side frame 214. However, the projecting part 214c may also be partially disconnected in the entire perimeter of the side frame 214. Under predetermined conditions of washing and the like of the automobile in which the battery pack 10 is mounted, high-pressure water may be sprayed diagonally from below on the outer side of the accommodating body 200. The projecting part 214c may function as at least a portion of a structure body that blocks direct injection of the water onto the upper seal material 234.

The embodiment of the present invention has been described above with reference to the drawings, but these descriptions are examples of the present invention, and various other configurations may also be adopted in addition to those described above.

For example, in the embodiment, the fastening structure between the first lower mounting part 212a of the lower case 210 and the second lower mounting part 214a1 of the side frame 214, and the fastening structure between the first upper mounting part 214a2 of the side frame 214 and the second upper mounting part 220a of the upper case 220 have been described. These fastening structures may also be applied to two other mounting parts opposed to each other via a seal material.

This application claims priority based on Japanese Patent Application No. 2022-124576 filed on August 4, 2022, the entirety of the disclosure of which is incorporated herein.

### Reference Signs List

10: battery pack
100: battery module
110: terminal
200: accommodating body
210: lower case
212: lower plate
212a: first lower mounting part
214: side frame
214a1: second lower mounting part
214a2: first upper mounting part
214a3: inclined surface
214b: partition wall
214c: projecting part
214d: lower space
214e: upper space
214f: gas discharge path
214g: gas discharge hole
214h: pressure release valve
220: upper case
220a: second upper mounting part
220b: upper cover part
220c: side cover part
232: lower seal material
234: upper seal material
242: lower rivet nut
242a: lower body
242a1: lower expanding part
242b: lower head
244: lower bolt
246: upper rivet nut
246a: upper body
246a1: upper expanding part
246b: upper head
248: upper bolt
250: accommodating space
262: lower inner space
264: lower outer space

## Claims

1. A battery pack comprising:
an accommodating body comprising two mounting parts opposed to each other via a seal material;
a battery module accommodated in the accommodating body;
a first fastener fastened to at least one of the two mounting parts, at least a portion of the first fastener being located between the two mounting parts; and
a second fastener fastened to the first fastener and fastening the two mounting parts to each other.

2. The battery pack according to claim 1, wherein a portion of the first fastener enters a space provided inside the accommodating body.

3. The battery pack according to claim 1 or 2, wherein a gap between the two mounting parts comprises a first space in which at least a portion of the seal material is embedded, and a second space in which the at least a portion of the first fastener is disposed, and
a distance between the two mounting parts on both sides of the second space is shorter than a distance between the two mounting parts on both sides of the first space.

4. The battery pack according to claim 3, wherein an inclined surface is provided on at least a portion of the two mounting parts between the first space and the second space.
